# EUROPEAN PATENT APPLICATION

(11) **EP 4 782 233 A1**
(43) Date of publication of application: **29.07.2026**
(21) Application number: 25213166.9
(22) Date of filing: 04.11.2025
(51) Int. Cl.: B60H 1/00, B60K 1/00, B60K 11/02

(54) **COOLANT RESERVOIR INTEGRATED MODULE AND AUTOMOBILE**

(30) Priority: 23.01.2025 CN 202510115022
(71) Applicant: Zhejiang Leapmotor Technology Co., Ltd, Hangzhou, Zhejiang 310051 (CN)
(72) Inventor: ZHANG, Kexin, Hangzhou, 310051 (CN); LUO, Yaxin, Hangzhou, 310051 (CN); ZHANG, Weiwei, Hangzhou, 310051 (CN); LI, Yunmeng, Hangzhou, 310051 (CN); SHEN, Fangrong, Hangzhou, 310051 (CN)
(74) Representative: Novagraaf Technologies

(57) **Abstract**

The present invention relates to a coolant reservoir integrated module and an automobile. The coolant reservoir integrated module includes a flow channel plate and a coolant reservoir, where a multi-way valve is disposed on the flow channel plate, the flow channel plate is provided with external interfaces, at least two circuits are disposed in the flow channel plate, an inlet and an outlet of each of the at least two circuits are in communication with an interface of the multi-way valve and/or the external interfaces, and a water pump is correspondingly disposed in each of the at least two circuits; an exhaust and water replenishment passage is further disposed in the flow channel plate, the exhaust and water replenishment passage is internally divided into an exhaust section and a water replenishment section.

## Description

### Technical Field

The present invention relates to the technical field related to new energy vehicles, and in particular to a coolant reservoir integrated module and an automobile.

### Background

Owing to rapid development of new energy electric vehicles, diversity of sales districts, and fierce competition in market, the requirement for a thermal management system in the electric vehicle has been increasingly improved, and research on the thermal management system for the electric vehicle has received increasingly eye-catching attention.

A coolant reservoir is essential to the thermal management system for the electric vehicle. At present, coolant reservoirs such as a motor coolant reservoir, a battery coolant reservoir, and a heating coolant reservoir are integrally designed typically, so as to reduce coolant reservoir capacity, reduce a filling amount of a coolant of the electric vehicle, and reduce line filling time, thereby achieving the effect of reducing cost.

However, a current integrated coolant reservoir typically has a plurality of gas removal and water replenishment ports for being in communication with different circuits (a battery circuit, a motor circuit, a heating circuit, etc.). As a result, each circuit has a pressure drop difference during operation of water pumps, and a stepped liquid level difference (which is unrecoverable without opening a reservoir cover) is formed in each cavity of the integrated coolant reservoir.

On one hand, the problem of heat transfer between the battery circuit, the motor circuit, and the heating circuit will be caused by a pressure difference, thereby affecting heating capacity of a system. On the other hand, a hydraulic pressure difference will continue to be increased along with long-term operation, resulting in continuous reduction in a liquid level of a low water replenishment port. Eventually, a phenomenon of gas backflow will occur, and bubbles will be generated in the circuits, thereby affecting working efficiency of the water pumps.

### Summary

Based on this, it is necessary to provide a coolant reservoir integrated module and an automobile capable of solving the above problems of a pressure drop difference and a hydraulic pressure difference aiming at the problem that the pressure drop difference exists between circuits connected to a current integrated coolant reservoir along with operation of water pumps, and a liquid level difference is formed in each cavity of the coolant reservoir, thereby affecting heating capacity of a system and working efficiency of the water pumps.

The present application provides a coolant reservoir integrated module at first. The coolant reservoir integrated module includes a flow channel plate and a coolant reservoir, where a multi-way valve is disposed on the flow channel plate, the flow channel plate is provided with external interfaces, at least two circuits are disposed in the flow channel plate, an inlet and an outlet of each of the at least two circuits are in communication with an interface of the multi-way valve and/or the external interfaces, and a water pump is correspondingly disposed in each of the at least two circuits;
an exhaust and water replenishment passage is further disposed in the flow channel plate, the exhaust and water replenishment passage is internally divided into an exhaust section and a water replenishment section, and one of the at least two circuits is in communication with the coolant reservoir by means of the exhaust section and the water replenishment section; and
microchannel circuits corresponding to other circuits of the at least two circuits one to one are further disposed in the flow channel plate, and the other circuits of the at least two circuits are in communication with the exhaust section by means of the microchannel circuits.

In an embodiment, a motor circuit, a battery circuit, and a heating circuit are disposed in the flow channel plate, and a first five-way valve and a second five-way valve are disposed on the flow channel plate;
an inlet of the motor circuit is in communication with an interface of the first five-way valve, and an outlet of the motor circuit is in communication with the external interfaces; an inlet of the battery circuit is in communication with the interface of the first five-way valve, and an outlet of the battery circuit is in communication with an interface of the second five-way valve; and an inlet and an outlet of the heating circuit are in communication with two external interfaces respectively.

In an embodiment, the motor circuit is in communication with the exhaust and water replenishment passage.

In an embodiment, the exhaust section includes a first exhaust section, and a second exhaust section, the microchannel circuits are in communication with the second exhaust section, and the second exhaust section is in communication with a radiator by means of the external interfaces; and
the coolant reservoir is internally divided into a first exhaust channel, a second exhaust channel, and a water replenishment channel, one end of the first exhaust channel is in communication with the first exhaust section, an other end of the first exhaust channel is in communication with the water replenishment channel, one end of the second exhaust channel is in communication with the second exhaust section, an other end of the second exhaust channel is in communication with the water replenishment channel, and the water replenishment channel is in communication with the water replenishment section.

In an embodiment, a plurality of isolation plates are disposed in the second exhaust channel, and balance holes are provided at bottoms of the plurality of isolation plates in a penetrating manner in a channel flow direction.

In an embodiment, the first exhaust section and the second exhaust section are located on two sides of the water replenishment section respectively.

In an embodiment, each of the microchannel circuits has a diameter ranging from 2 mm to 3 mm.

In an embodiment, a plurality of flow blocking ribs are disposed on two sides of an inner wall of each microchannel circuit in a staggered manner in a length direction of the microchannel circuit, and each of the plurality of flow blocking ribs is inclined towards one side close to the exhaust section in the length direction of the microchannel circuit.

In an embodiment, projections of any two adjacent flow blocking ribs of the plurality of flow blocking ribs in the length direction of the microchannel circuit at least partially coincide.

A second aspect of the present application provides an automobile. The automobile includes the above coolant reservoir integrated module.

According to the above coolant reservoir integrated module, only one of the circuits is in communication with the coolant reservoir by means of the exhaust and water replenishment passage, and other circuits are in communication with the exhaust section by means of the microchannel circuits. The microchannel circuits can balance system pressures of different circuits to avoid a hydraulic pressure difference between different circuits, thereby improving safety, and avoiding the problem of heat transfer. Due to a design of only one exhaust and water replenishment passage, no liquid level difference is formed in the coolant reservoir, thereby eliminating a phenomenon of gas backflow, and improving working efficiency of the water pumps.

### Brief Description of the Drawings

Fig. 1 is a perspective view of a coolant reservoir integrated module of the present application;
Fig. 2 is an exploded view of a flow channel plate in Fig. 1;
Fig. 3 is a schematic diagram of a liquid path in each circuit of a refrigerant side flow channel plate in Fig. 2;
Fig. 4 is a schematic diagram of a liquid path in a motor circuit of the refrigerant side flow channel plate in Fig. 2;
Fig. 5 is a schematic diagram of a liquid path in a battery circuit of the refrigerant side flow channel plate in Fig. 2;
Fig. 6 is a schematic diagram of a liquid path in a heating circuit of the refrigerant side flow channel plate in Fig. 2; and
Fig. 7 is a cross-sectional view in a direction A-A in Fig. 1.

Reference numerals: 10, flow channel plate; 10a, refrigerant side flow channel plate; 10b, coolant side flow channel plate; 11, multi-way valve; 12, external interface; 13, circuit; 13a, motor circuit; 13b, battery circuit; 13c, heating circuit; 14, microchannel circuit; 14a, flow blocking rib; 15, water pump; 16, exhaust and water replenishment passage; 161, exhaust section; 161a, first exhaust section; 161b, second exhaust section; 162, water replenishment section; 20, coolant reservoir; 21, first exhaust channel; 22, second exhaust channel; 22a, isolation plate; 22b, balance hole; and 23, water replenishment channel.

### Detailed Description of the Embodiments

In order to enable the above objective, features, and advantages of the present invention to be more apparent and easily understood, the particular embodiments of the present invention will be described in detail below in combination with the accompanying drawings. Many specific details are set forth in the following description to facilitate full understanding of the present invention. However, the present invention can be implemented in many other ways different from those described herein, similar improvements can be made by those skilled in the art without departing from the connotation of the present invention, and therefore the present invention is not limited by the specific embodiments disclosed below.

In the description of the present invention, it should be noted that the terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. indicate azimuthal or positional relations based on those shown in the accompanying drawings only for ease of description of the present invention and for simplicity of description, and are not intended to indicate or imply that the device or element indicated must have a particular orientation and be constructed and operative in a particular orientation, and thus cannot be construed as a limitation on the present invention.

In addition, the terms "first" and "second" are for descriptive purposes only and are not to be construed as indicating or implying their relative importance or implicitly specifying the number of indicated technical features. Thus, a feature defined with "first" and "second" can explicitly or implicitly include at least one of the features. In the description of the present invention, "plurality" means at least two, for embodiment, two, three, etc., unless expressly specified otherwise.

In the present invention, unless explicitly specified and defined otherwise, the terms "mount", "connect", "connected", "fix", etc. should be understood in a broad sense. For instance, they can denote fixed connection, detachable connection, or integral connection, denote mechanical connection, or electric connection, denote direct connection or indirect connection by means of an intermediate medium, or denote communication between interiors of two elements or interaction between two elements, unless explicitly defined otherwise. For those of ordinary skill in the art, the specific meanings of the above terms in the present invention can be understood according to specific circumstances.

In the present invention, unless explicitly specified and defined otherwise, a first feature being "above" or "below" a second feature can denote direct contact between the first feature and the second feature, or indirect contact between the first feature and the second feature by means of an intermediate medium. Moreover, the first feature being "on", "above", and "over" the second feature can be the first feature being directly above or obliquely above the second feature, or simply mean that the first feature is at a higher level than the second feature. The first feature being "under", "below", and "underneath" the second feature can be the first feature being directly below or obliquely below the second feature, or simply mean that the first feature is at a higher level than the second feature.

It should be noted that if an element is referred to as being "fixed to" or "disposed on" another element, the element can be directly on another element or an intermediate element may exist. If an element is considered to be "connected" to another element, the element can be directly connected to another element or an intermediate element may exist simultaneously. The terms "vertical", "horizontal", "upper", "lower", "left", "right" and similar expressions used herein are just for illustrative purposes, and do not mean sole embodiments.

When a heating circuit, a battery circuit, a motor circuit, etc. of an existing coolant reservoir integrated module work, a temperature of a coolant in the circuits is gradually increased. Since an expansion coefficient of the coolant is greatly influenced by temperature, the higher the temperature is, the larger the expansion coefficient is. If separate exhaust ports are not designed in the circuits, a system pressure in the circuits may be increased due to increase in the temperature of the coolant, and the safety problem caused by pressure resistance may occur during long-term operation. Thus, current integrated coolant reservoirs are mostly provided with a plurality of exhaust and water replenishment ports corresponding to the circuits one to one, and the exhaust and water replenishment ports are in communication with the circuits respectively.

Since the circuits are independent of each other, a pressure difference exists between the circuits during operation of water pumps in the circuits. Due to the pressure difference, the problem of heat transfer exists between the circuits, and a stepped liquid level difference (which is unrecoverable without opening a reservoir cover) is formed in a cavity corresponding to each exhaust and water replenishment port of the coolant reservoir. After a long time of operation, the liquid level difference continues to be increased, and a phenomenon of gas backflow occurs, thereby affecting working efficiency of the water pumps.

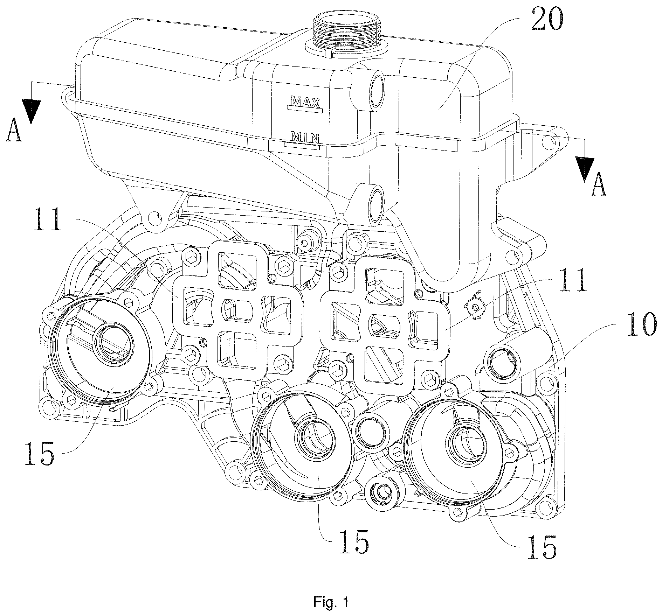

To this end, in combination with Figs. 1, 2 and 3, the present application provides a coolant reservoir integrated module at first. The coolant reservoir integrated module includes a flow channel plate 10 and a coolant reservoir 20. A multi-way valve 11 is disposed on the flow channel plate 10, the flow channel plate 10 is provided with external interfaces 12, at least two circuits 13 are disposed in the flow channel plate 10, an inlet and an outlet of each of the at least two circuits 13 are in communication with an interface of the multi-way valve 11 and/or the external interfaces 12, and a water pump 15 is correspondingly disposed in each of the at least two circuits 13. An exhaust and water replenishment passage 16 is further disposed in the flow channel plate 10, the exhaust and water replenishment passage 16 is internally divided into an exhaust section 161 and a water replenishment section 162, and one of the circuits 13 is in communication with the coolant reservoir 20 by means of the exhaust section 161 and the water replenishment section 162. Microchannel circuits 14 corresponding to other circuits 13 of the at least two circuits 13 one to one are further disposed in the flow channel plate 10, and the other circuits 13 of the at least two circuits 13 are in communication with the exhaust section 161 by means of the microchannel circuits 14.

In the present application, only one circuit 13 in the circuits 13 is in communication with the coolant reservoir 20 by means of the exhaust and water replenishment passage 16, and other circuits 13 are in communication with the exhaust section 161 by means of the microchannel circuits 14. The microchannel circuits 14 can balance system pressures of different circuits 13 to avoid a hydraulic pressure difference between different circuits 13, thereby improving safety, and avoiding the problem of heat transfer. Due to a design of only one exhaust and water replenishment passage 16, no liquid level difference is formed in the coolant reservoir 20, thereby eliminating a phenomenon of gas backflow, and improving working efficiency of the water pumps 15.

Specifically, each circuit 13 in the flow channel plate 10 can be regarded as a whole system. Operation of each circuit 13 is switched by means of the multi-way valve 11, and the system is in communication with the coolant reservoir 20 only by means of one exhaust and water replenishment passage 16, thereby ensuring functions of water replenishment and gas removal of the system, and simultaneously reducing heat leakage in a series mode.

One of the circuits 13 in the system is directly in communication with the exhaust and water replenishment passage 16, and an exhaust requirement of the circuit 13 can be satisfied by means of the exhaust section 161. Moreover, the coolant reservoir 20 can replenish water into the circuit 13 by means of the water replenishment section 162, thereby satisfying a water replenishment requirement of the whole system.

Other circuits 13 are in communication with the exhaust section 161 by means of the microchannel circuits 14. When a coolant in the circuits 13 expands and a pressure of the system is increased due to a design of the microchannel circuits, a gas can be removed and the pressure can be released by means of the microchannel circuits 14 to satisfy a requirement of balancing the pressure of each circuit 13. Moreover, flow and temperature loss can be reduced as much as possible to avoid the situation that heat exchange efficiency of the system is influenced due to heat leakage.

More specifically, after the coolant enters the coolant reservoir 20 by means of the exhaust section 161, the coolant flows and impacts isolation plates in the coolant reservoir 20, and a gas in the coolant is separated accordingly. The gas exists at an upper end of the coolant reservoir 20, and a liquid participates in circulation and returns to the flow channel plate 10 by means of the water replenishment section 162 to achieve an effect of gas-liquid separation, such that a liquid level in the coolant reservoir 20 is kept balanced.

Moreover, the circuits 13 are connected by means of the multi-way valve 11, and the circuits 13 can be switched between different modes by adjusting opening and closing states of different interfaces of the multi-way valve 11 in cooperation with the water pump 15 in each circuit 13. Thus, the coolant reservoir integrated module of the present application has a more compact structure, and apparatus cost and an apparatus size are effectively reduced on the premise of ensuring that different functions of each mode can satisfy use requirements.

In some embodiments, the microchannel circuits 14 have a diameter ranging from 2 mm to 3 mm. Understandably, if the microchannel circuits 14 have the excessively small diameter, requirements of exhaust pressure release of the corresponding circuits 13 may not be satisfied. If the microchannel circuits 14 have the excessively large diameter, flow and temperature loss of the circuits 13 may be large, resulting in reduction in heat exchange efficiency of a system caused by heat leakage.

The requirement of exhaust pressure release and the heat exchange efficiency of the system can be better balanced by controlling the diameter range of the microchannel circuits 14 within 2 mm to 3 mm. In some embodiments, the microchannel circuits 14 have the diameter of 3 mm.

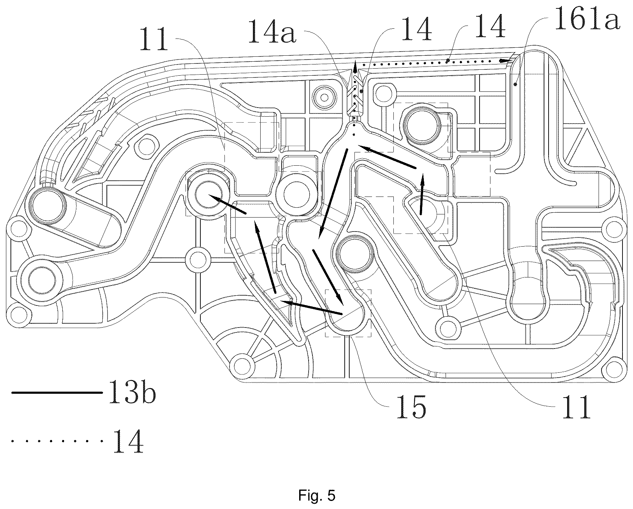

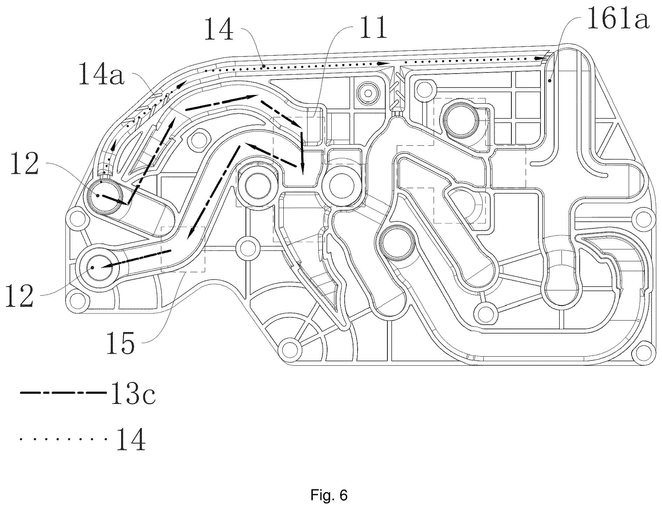

In combination with Figs. 5 and 6, in some embodiments, a plurality of flow blocking ribs 14a are disposed on two sides of an inner wall of each microchannel circuit 14 in a staggered manner in a length direction of the microchannel circuit 14, and the flow blocking ribs 14a are inclined towards one side close to the exhaust section 161 in the length direction of the microchannel circuit 14.

By arranging the plurality of flow blocking ribs 14a which is toothed, the situation that when the corresponding circuits 13 do not work, the coolant in the circuit 13 working flows into the corresponding circuits 13, resulting in heat leakage can be avoided. For example, when the heating circuit 13c and the battery circuit 13b do not work and only the motor circuit 13a works, the flow blocking ribs 14a can reduce or even prevent the coolant in the motor circuit 13a from flowing into the battery circuit 13b and the heating circuit 13c, thereby reducing an amount of heat leakage, and improving the heat exchange efficiency of the system.

In some embodiments, communication positions between the microchannel circuits 14 and the circuits 13 are close to inlet sides of the circuits 13, and the flow blocking ribs 14a are disposed on one sides in the microchannel circuits 14 close to the circuits 13.

With reference to Figs. 5 and 6, in some embodiments, projections of any two adjacent flow blocking ribs 14a of the plurality of flow blocking ribs 14a in the length direction of the microchannel circuit 14 at least partially coincide to improve a blocking effect of the flow blocking ribs 14a on a backflow coolant, and further improve the heat exchange efficiency of the coolant reservoir integrated module of the present application.

Clearly, in some other embodiments, flow blocking ribs 14a may have other shapes or structures as long as the flow blocking ribs may have an effect of blocking the backflow coolant. Any embodiments are not given herein in the present application.

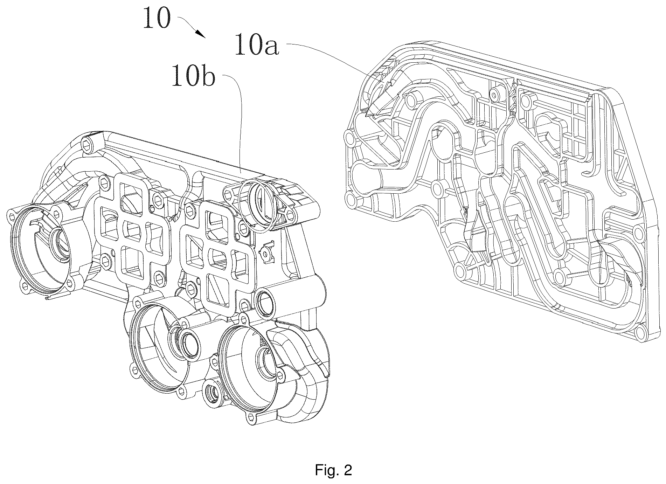

With reference to Fig. 2, in some embodiments, a flow channel plate 10 includes a refrigerant side flow channel plate 10a and a coolant side flow channel plate 10b. The refrigerant side flow channel plate and the coolant side flow channel plate are fixed to each other to form each circuit 13 inside the flow channel plate. Water pumps 15 and a multi-way valve 11 are directly mounted on the flow channel plate 10 and are in communication with the internal circuits 13. Pipelines in a traditional design are replaced with flow channels inside the flow channel plate 10. Thus, on one hand, engine room arrangement is simplified, and cost and weight are greatly reduced. On the other hand, overall flow resistance of a system is reduced.

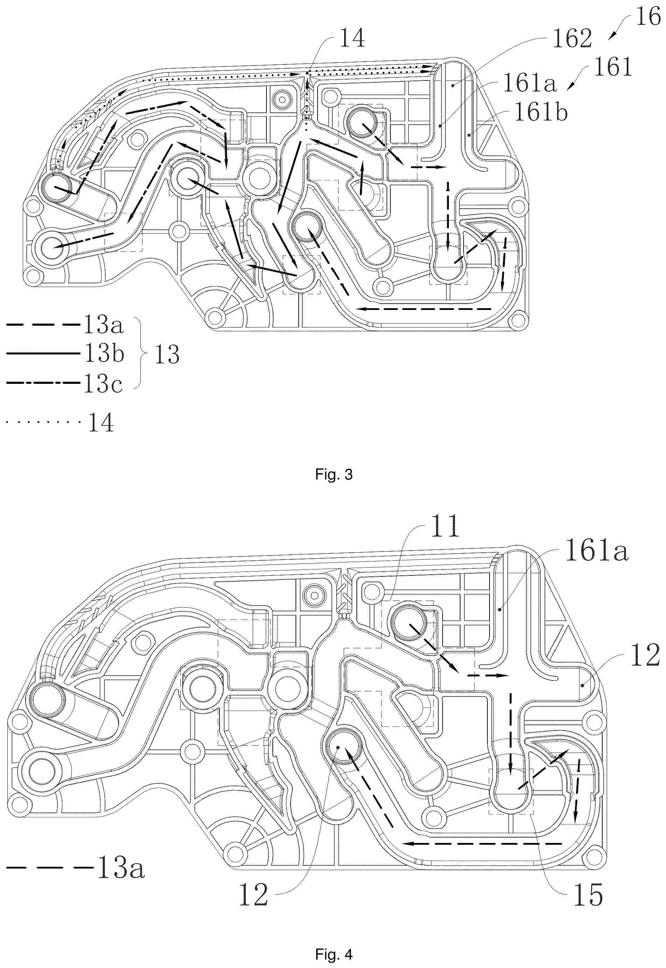

In combination with Figs. 3, 4, 5, and 6, in some embodiments, a motor circuit 13a, a battery circuit 13b, and a heating circuit 13c are disposed in the flow channel plate 10, and a first five-way valve 11a and a second five-way valve 11b are disposed on the flow channel plate 10.

An inlet of the motor circuit 13a is in communication with an interface of the first five-way valve 11a, and an outlet of the motor circuit is in communication with the external interfaces 12. An inlet of the battery circuit 13b is in communication with the interface of the first five-way valve 11a, and an outlet of the battery circuit is in communication with an interface of the second five-way valve 11b. An inlet and an outlet of the heating circuit 13c are in communication with the two external interfaces 12 respectively.

According to the coolant reservoir integrated module of the present application, a battery can be heated separately by utilizing self-heating of an electric motor under a low-temperature environment, and modes can further be switched by utilizing two five-way valves to heat the battery simultaneously by means of the heating circuit 13c and the motor circuit 13a. A temperature of the battery can be rapidly increased in winter, thereby avoiding the situation that the battery influences discharge efficiency due to a low temperature state, thereby further influencing a range of a whole vehicle.

In combination with Figs. 3 and 4, in some embodiments, the motor circuit 13a is in communication with the exhaust and water replenishment passage 16. Compared with the battery circuit 13b and the heating circuit 13c, an electric motor has a highest heat generation value, a largest expansion coefficient of a coolant, and a largest requirement of exhaust pressure release. Thus, the motor circuit 13a is directly in communication with the exhaust and water replenishment passage 16 such that a pressure difference in a system may be better avoided.

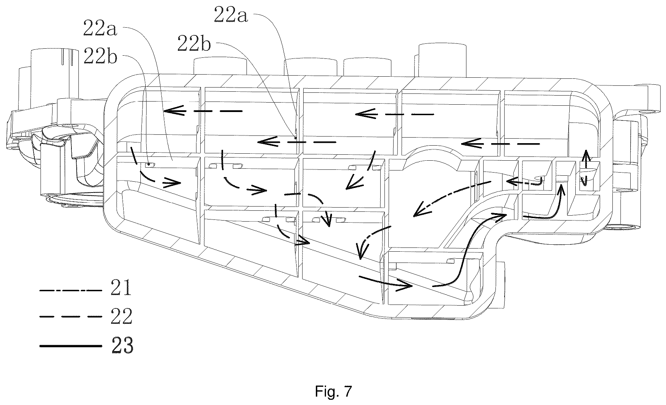

In combination with Figs. 4 and 7, in some embodiments, the exhaust and water replenishment passage 16 is internally divided into the water replenishment section 162, a first exhaust section 161a, and a second exhaust section 161b, the microchannel circuits 14 are in communication with the second exhaust section 161b, and the second exhaust section 161b is in communication with a radiator by means of the external interfaces 12.

The coolant reservoir 20 is internally divided into a first exhaust channel 21, a second exhaust channel 22, and a water replenishment channel 23, one end of the first exhaust channel 21 is in communication with the first exhaust section 161a, the other end of the first exhaust channel is in communication with the water replenishment channel 23, one end of the second exhaust channel 22 is in communication with the second exhaust section 161b, the other end of the second exhaust channel is in communication with the water replenishment channel 23, and the water replenishment channel 23 is in communication with the water replenishment section 162.

The first exhaust section 161a and the second exhaust section 161b are disposed in the exhaust and water replenishment passage 16, and the second exhaust section 161b is in communication with a radiator such that two gas removal modes can be switched by switching interfaces of the multi-way valve 11. The motor circuit 13a is in communication with the coolant reservoir 20 by means of the first exhaust section 161a or in communication with the coolant reservoir 20 by means of the second exhaust section 161b, so as to satisfy different requirements of gas removal under a motor temperature equalization mode or a motor cooling mode.

Specifically, in the motor temperature equalization mode, part of a coolant in the motor circuit 13a enters the coolant reservoir 20 by means of the first exhaust section 161a, passes through the first exhaust channel 21 and the water replenishment channel 23, and then returns to the motor circuit 13a along the water replenishment section 162. The coolant does not pass through the radiator in the process.

In the motor cooling mode, part of the coolant in the motor circuit 13a enters the radiator (not shown) by means of the external interfaces 12, enters the coolant reservoir 20 by means of the second exhaust section 161b, passes through the second exhaust channel 22 and the water replenishment channel 23, and then returns to the motor circuit 13a along the water replenishment section 162.

Thus, the coolant reservoir integrated module of the present application can have an effect of gas removal under the motor temperature equalization mode and the motor cooling mode to ensure reliability of the system.

With reference to Fig. 7, in some embodiments, a plurality of isolation plates 22a are disposed in the second exhaust channel 22, and balance holes 22b are provided at bottoms of the isolation plates 22a in a penetrating manner in a channel flow direction. The second exhaust channel 22 has a length greater than that of the first exhaust channel 21, and the number of the isolation plates 22a in the second exhaust channel 22 is greater than that of the first exhaust channel 21.

After the coolant enters the coolant reservoir 20 by means of the exhaust section 161, the coolant flows and impacts the isolation plates in the coolant reservoir 20, and a gas in the coolant is separated accordingly. The gas exists at an upper end of the coolant reservoir 20, and a liquid participates in circulation and returns to the flow channel plate 10 by means of the water replenishment section 162 to achieve the effect of gas-liquid separation. By setting the length of the second exhaust channel 22 to be greater than that of the first exhaust channel 21, and the number of the isolation plates 22a in the second exhaust channel 22 to be greater than that of the first exhaust water passage 21, gas removal efficiency in the motor cooling mode can be improved to satisfy the requirement of gas removal of two different modes.

In combination with Figs. 4 and 7, in some embodiments, the first exhaust section 161a and the second exhaust section 161b are located on two sides of the water replenishment section 162 respectively.

A second aspect of the present application provides an automobile. The automobile includes the above coolant reservoir integrated module.

Various technical features of the above embodiments can be freely combined. To simplify description, all possible combinations of the various technical features of the above embodiments are not described. However, as long as the combinations of these technical features do not conflict, they shall be considered to fall within the scope of description.

The above embodiments are merely several embodiments of the present invention, and are specifically described in detail, but cannot be interpreted as limiting the scope of the patent for the invention as a result. It shall be noted that for those of ordinary skill in the art, they can further make several transformations and improvements on the premise of not deviating from the conception of the present invention, and these transformations and improvements shall fall within the scope of protection of the present invention. Thus, the scope of protection of the patent for the present invention shall be subject to the appended claims.

## Claims

1. A coolant reservoir integrated module, comprising: a flow channel plate (10) and a coolant reservoir (20), wherein a multi-way valve (11) is disposed on the flow channel plate (10), the flow channel plate (10) is provided with external interfaces (12), at least two circuits (13) are disposed in the flow channel plate (10), an inlet and an outlet of each of the at least two circuits (13) are in communication with an interface of the multi-way valve (11) and/or the external interfaces (12), and a water pump (15) is correspondingly disposed in each of the at least two circuits (13);
an exhaust and water replenishment passage (16) is further disposed in the flow channel plate (10), the exhaust and water replenishment passage (16) is internally divided into an exhaust section (161) and a water replenishment section (162), and one of the at least two circuits (13) is in communication with the coolant reservoir (20) by means of the exhaust section (161) and the water replenishment section (162); and
microchannel circuits (14) corresponding to other circuits (13) of the at least two circuits (13) one to one are further disposed in the flow channel plate (10), and the other circuits (13) of the at least two circuits (13) are in communication with the exhaust section (161) by means of the microchannel circuits (14).

2. The coolant reservoir integrated module according to claim 1, wherein a motor circuit (13a), a battery circuit (13b), and a heating circuit (13c) are disposed in the flow channel plate (10), and a first five-way valve (11a) and a second five-way valve (11b) are disposed on the flow channel plate (10);
an inlet of the motor circuit (13a) is in communication with an interface of the first five-way valve (11a), and an outlet of the motor circuit (13a) is in communication with the external interfaces (12); an inlet of the battery circuit (13b) is in communication with the interface of the first five-way valve (11a), and an outlet of the battery circuit (13b) is in communication with an interface of the second five-way valve (11b); and an inlet and an outlet of the heating circuit (13c) are in communication with two external interfaces (12) respectively.

3. The coolant reservoir integrated module according to claim 2, wherein the motor circuit (13a) is in communication with the exhaust and water replenishment passage (16).

4. The coolant reservoir integrated module according to claim 3, wherein the exhaust section (161) comprises a first exhaust section (161a) and a second exhaust section (161b), the microchannel circuits (14) are in communication with the second exhaust section (161b), and the second exhaust section (161b) is in communication with a radiator by means of the external interfaces (12); and
the coolant reservoir (20) is internally divided into a first exhaust channel (21), a second exhaust channel (22), and a water replenishment channel (23), one end of the first exhaust channel (21) is in communication with the first exhaust section (161a), an other end of the first exhaust channel is in communication with the water replenishment channel (23), one end of the second exhaust channel (22) is in communication with the second exhaust section (161b), an other end of the second exhaust channel is in communication with the water replenishment channel (23), and the water replenishment channel (23) is in communication with the water replenishment section (162).

5. The coolant reservoir integrated module according to claim 4, wherein a plurality of isolation plates (22a) are disposed in the second exhaust channel (22), and balance holes (22b) are provided at bottoms of the plurality of isolation plates (22a) in a penetrating manner in a channel flow direction.

6. The coolant reservoir integrated module according to claim 4, wherein the first exhaust section (161a) and the second exhaust section (161b) are located on two sides of the water replenishment section (162) respectively.

7. The coolant reservoir integrated module according to claim 1, wherein each of the microchannel circuits (14) has a diameter ranging from 2 mm to 3 mm.

8. The coolant reservoir integrated module according to claim 1, wherein a plurality of flow blocking ribs (14a) are disposed on two sides of an inner wall of each microchannel circuit (14) in a staggered manner in a length direction of the microchannel circuit (14), and each of the plurality of flow blocking ribs (14a) is inclined towards one side close to the exhaust section (161) in the length direction of the microchannel circuit (14).

9. The coolant reservoir integrated module according to claim 8, wherein projections of any two adjacent flow blocking ribs (14a) of the plurality of flow blocking ribs (14a) in the length direction of the microchannel circuit (14) at least partially coincide.

10. An automobile, comprising: the coolant reservoir integrated module according to any one of claims 1-9.
